# EUROPEAN PATENT SPECIFICATION

(11) **EP 1 242 762 B1**
(45) Date of publication and mention of the grant of the patent: **22.09.2004**
(21) Application number: 00989950.1
(22) Date of filing: 05.12.2000
(51) Int. Cl.: F16K 17/04

(54) **SAFETY VALVE ASSEMBLY**
SICHERHEITSVENTIL
ENSEMBLE DE SOUPAPE DE SECURITE

(30) Priority: 06.12.1999 IT CO990032
(43) Date of publication of application: 25.09.2002
(73) Proprietor: GIACOMINI S.p.A., 28017 San Maurizio d'Opaglio (NO) (IT)
(72) Inventor: GIACOMINI, Luca, I-28010 Madonna del Sasso (IT)
(74) Representative: Zanella, Ireneo
(86) International application number: PCT/EP2000/012221
(87) International publication number: WO 2001/042696

(56) References cited:
- EP-A- 0 611 219
- EP-A- 0 679 822
- US-A- 5 294 093
- US-A- 5 771 924

## Description

### Background of the invention

The present invention relates to a cartridge valve and cartridge holder safety valve assembly for liquid or gaseous fluid circuits, according to the preamble of claim 1.

As is known, cartridge valve and cartridge holder safety valve assemblies for liquid or gaseous fluid systems are used in all those applications in which, for safety reasons, it is necessary to automatically perform a fluid releasing operation as the related pressure exceeds a predetermined value set in the safety valve, for example in heating systems in which the valve and cartridge holder assembly may be mounted on the circulating pump support generally arranged under the boiler, or at a location of difficult access and poorly lightened.

Since the pressures to be adjusted can assume different values, depending on the considered applications, and because of possible modifications of the system, it is also known to provide the mentioned safety valves in the form of cartridges to be removably engaged in a T-shape cartridge holder provided, on the same axis, with a fitting having a cartridge valve housing chamber as well as a related connection fitting, for example for connection with the pump supporting body, and an orthogonal fluid outlet fitting communicating with said valve cartridge housing chamber through windows formed through the cartridge body. A cartridge valve cover element is removably engaged with an inner insert of the cartridge pertaining to a calibrating spring assembly, thereby preventing the calibrating portions of the safety cartridge valve from being accessed.

However, in prior safety cartridge valves, the cup sealing gasket of the valve is arranged on the open bottom of the cartridge, outside of the latter and, upon assembling the cartridge in the cartridge holder, said sealing gasket will operatively abut against a seat formed in the cartridge holder. This is affected by two drawbacks. On a side, the cup sealing gasket can be freely accessed during the handling of the valve, with consequent possible damages of said valve, thereby prior safety valves of this type are not truly "inviolable", even if they would be defined as such. On the other side, as the safety valve is fitted, for example, to a heating circuit, possible small debris or hard particles which are usually present in the circulating water, could cause abrasions and scorings on the cartridge holder seat, during the outlet or discharging periods of the valves, with a consequent sealing failure as the valve is reclosed. Accordingly, in order to repair the above mentioned sealing failure, it would be necessary to replace the cartridge holder fitting.

A further disadvantage of prior safety valves of the above mentioned type, is that the application of said valves, for example on the pump supporting body, or the like, would always require a use of a cartridge holder fitting. This would be consequently very expensive both due to the cartridge holder fining cost and the machining costs related to the necessary machining operation to provide on the pump support, or other like support, a cartridge holder fitting housing seat as well as to use the necessary sealing means, usually comprising O-ring elements.

Yet a further disadvantage of prior safety valves is that they require complex coupling means for connecting the cartridge valve and cartridge holder. In addition to being expensive, these prior coupling means also require a rather skilled assembling operator who must frequently carry out the assembling/disassembling of the cartridge safety valve in a very small space of difficult access and poorly lightened.

### Summary of the invention

Accordingly, the aim of the present invention is to provide a cartridge valve and cartridge holder safety valve assembly of the type mentioned in the preamble, which overcomes the disadvantages and drawbacks of the prior inviolable cartridge valve and cartridge holder safety valves while allowing the cartridge valve to be directly assembled both in a cartridge holder of a T-type and, alternately, in a cartridge holder formed by a circuit component designed for simultaneously performing other functions, such as a supporting body for supporting the circulating pump, or pump holder, and also adapted to be fitted to the cartridge holder in a very simple, quick and safe manner.

According to one aspect of the present invention, the above mentioned aim is achieved by a cartridge valve and cartridge holder safety valve assembly having the features of claim 1.

Further embodiments and improvements being shown in the dependent claims, the cartridge valve and cartridge holder safety valve assembly according to the invention provides a lot of important different advantages.

At first, in handling the cartridge valve, it is not possible to directly access the bottom of the sealing cup gasket of the valve, thereby the subject cartridge safety valve becomes a truly "inviolable" safety valve, while assuring a perfect integrity of the cartridge as it is assembled. Moreover, the provision of a cartridge body having an independent cartridge body bottom allows to advantageously provide, on said bottom, a coupling lug, adapted to advantageously house a sealing element, for example an O-ring in a corresponding easily made housing seat. Said sealing element or O-ring could also be advantageously engaged in the seat housing said cartridge coupling lug and provided with a conventional T-shape cartridge holder, or a cartridge holder of different configuration, for example as a support for the circulating pump, as above mentioned, or the like. This alternative embodiment would clearly allow said inviolable cartridge safety valve to be directly assembled, for example, on the pump support thereby allowing to omit the prior T-shape cartridge holder fitting. This leaving out of the T-shape cartridge holder body would allow, in turn, to reduce the size of the cartridge and cartridge holder safety valve assembly, thereby facilitating the assembling/replacing of the cartridge valve even at locations of difficult access.

Yet another important advantage is that a possible sealing failure due to abrasions or scorings of the seat cooperating with the safety valve cup gasket could be eliminated by a simple replacing of said inviolable cartridge safety valve, instead of replacing the overall cartridge and cartridge holder valve assembly, as necessary in the prior art.

Yet another advantage is that the removable coupling means for coupling the cartridge valve and cartridge holder can be partially made during the making of the body of the cartridge and cartridge holder and partially by simple chip removal machining operations, which could be performed in very small times during the machining of the body of the cartridge and cartridge holder, and this in a very unexpensive manner. To the above it should be added that also the provided removable locking element would be very unexpensive, thereby said element, if lost, could be easily replaced in an optimum functional manner by a small metal wire length. Moreover, also a proper connection of the cartridge valve and cartridge holder can be performed likewise by parts to be directly made by molding on the cartridge and cartridge holder body, thereby also these parts could be made in a very unexpensive and reliable manner.

According to claim 2, in order to properly house the cartridge valve, the cartridge holder must be simply provided with a seat for housing the independent bottom or bottom end piece of the cartridge, instead of housing the bottom of the cup sealing gasket projecting from the cartridge, as in the prior art, thereby saving the cost associated with additional material or machining operations.

According to the teachings of claim 3, it is provided a novel approach allowing the inviolable cartridge safety valve to be directly housed on any desired components of the considered systems, for example on a pump support associated with the boiler of a heating system or a hot water producing system, this approach allowing to fully omit the T-shape cartridge holder fittings.

Claim 4 allows to provide a perfect sealing between the cartridge valve and cartridge holder, by advantageously providing a conventional sealing element or O-ring which is housed either on the bottom or on the bottom end piece of the cartridge or in the seat of the cartridge holder housing therein said bottom or bottom end piece of the cartridge.

The teaching of claim 1 provides advantageous quick coupling means for quickly coupling the cartridge valve and cartridge holder, which quick coupling means can be made during the same molding and chip removal machining steps for making both the cartridge and the cartridge holder, thereby greatly reducing the machining cost for making them.

The teachings of claims 5, 6 and 7 relate to preferred embodiments of said quick coupling means for quickly coupling the cartridge and cartridge holder, said approaches providing a very simple and easy handling for performing the cartridge locking/unlocking operations, while providing a unique assembling location between the cartridge and cartridge holder even under difficult access and poor visibility conditions.

### Brief description of the drawings

Further characteristics, advantages and details of the cartridge and cartridge holder inviolable safety valve assembly according to the present invention will become more apparent hereinafter from the following disclosure with reference to two preferred embodiments thereof, being illustrated, by way of a representative example, in the accompanying drawings, where:
Figure 1 is a perspective view of a cartridge valve and cartridge holder inviolable safety valve assembly;
Figure 2 illustrates the cartridge inviolable safety valve for a half in a side elevation view and for the other half in a cross-sectional view taken along the section plane II-II;
Figure 3 illustrates the cartridge valve of figure 2 by a cross-sectional view turned through 90°, i.e. taken according to the cross plane III-III of figure 4;
Figure 4 illustrates a top plan view of the valve of figure 3, a half of this view being a cross-sectional view according to the section plane IV-IV of figure 3;
Figure 5 illustrates, on a further enlarged scale, the detail A of figure 2;
Figure 6 illustrates, on a further enlarged scale, the detail B of figure 3;
Figure 7 illustrates, on a further enlarged scale, the detail C of figure 4; and
Figure 8 is a schematic top plan view illustrating a generic component of a liquid or gaseous fluid system, for example a pump supporting body or the like, designed for simultaneously operating as a cartridge holder, of a not shown heating system, hot water producing system or the like.

### Description of the preferred embodiments

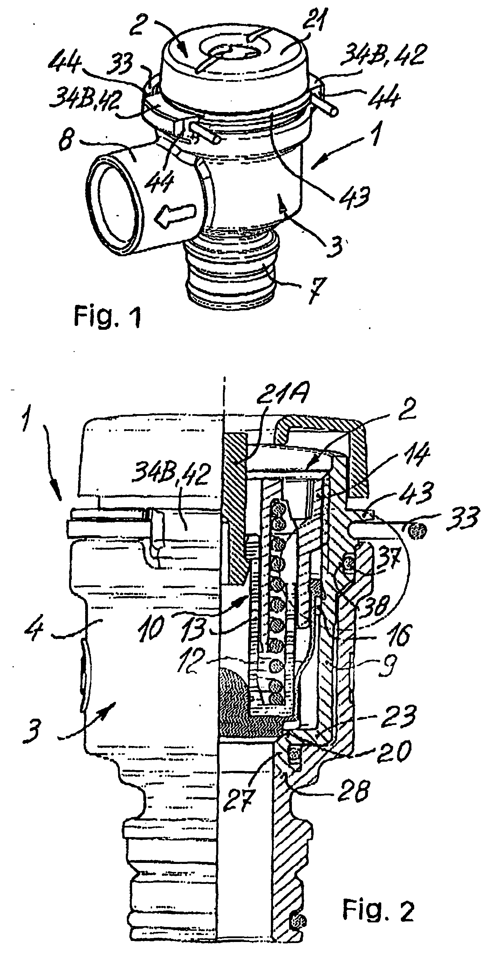

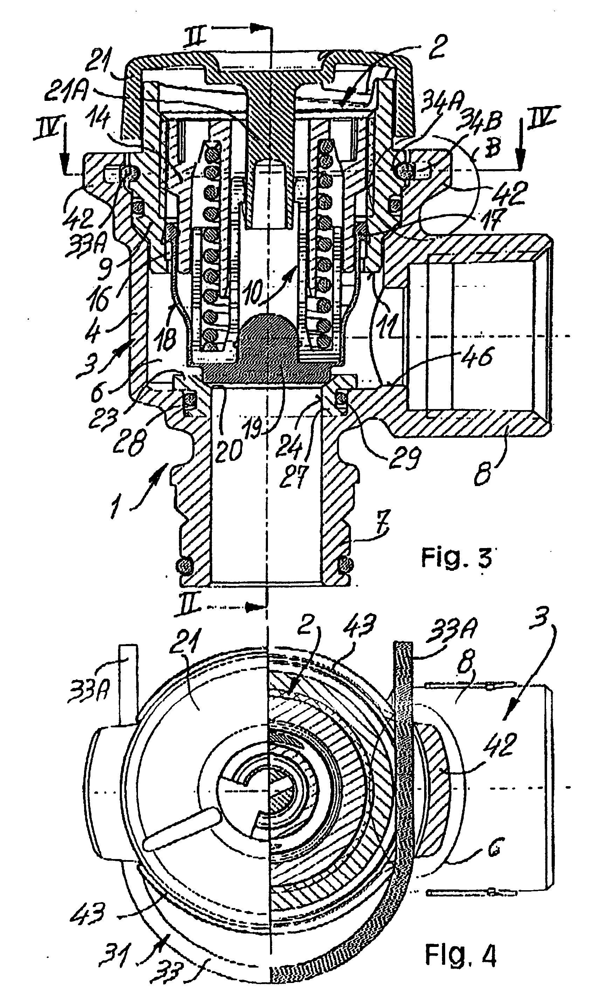

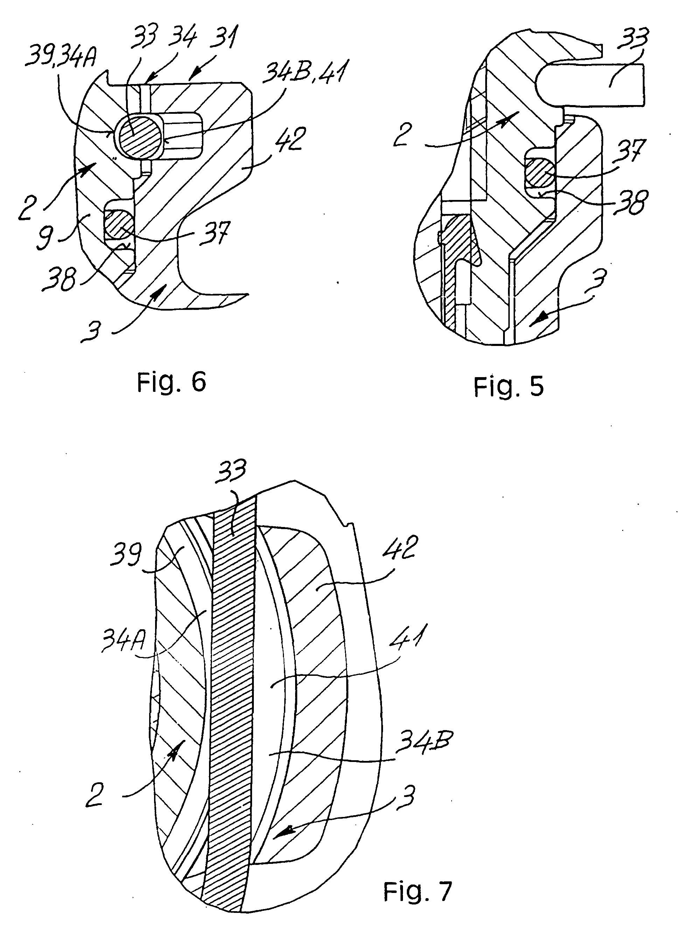

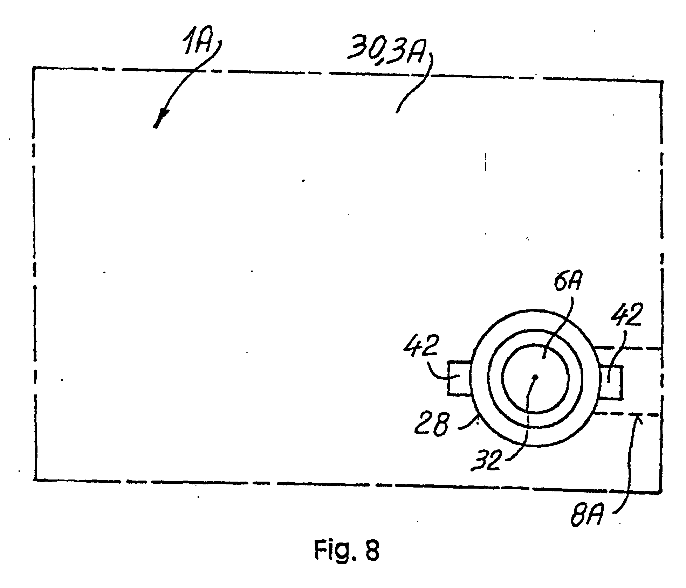

With reference to the above mentioned figures, in which like portions have been indicated by like reference numbers, the cartridge valve and cartridge holder inviolable safety valve assembly according to the present invention has been generally indicated by 1 (figures 1 to 7) and 1 A (figure 8).

Said valve assembly being substantially constituted by an inviolable safety cartridge valve 2 and a cartridge holder element 3 (figures 1 to 7) and 3A (figure 8).

The cartridge holder 3 has a T-shape, which is partially known, with a first fitting 4 defining a chamber 6 for housing herein the cartridge valve 2, a second coaxial fitting 7, to be coupled to the liquid and gaseous system, as well as a third orthogonal fitting 8 forming the fluid outlet, as the pressure in the circuit exceeds the value of the cartridge valve 2 calibrating pressure. For further details, the cartridge holder 3 will be further disclosed hereinafter.

The inviolable safety cartridge valve 2 comprises, in a per partially known manner, a cartridge body 9, of substantially tubular configuration, with a plurality of perimetrical windows 11 and housed in its inside a calibrating assembly 10, the spring 12 of which is arranged between a piston element 13 and a calibrating threaded ring nut 14. As shown in the drawings, between the cartridge body 9 and threaded ring nut 14 is formed a gap 16 in which is housed the enlarged edge 17 of a sealing and reaction cup gasket 18, the bottom 19 of which fluidly contacts the circuit fluid and of which the safety valve 2 would set the maximum operating pressure. The body 9 of the cartridge is closed at the top thereof by a cover 21 which, as is shown in the drawing, can be engaged by a tubular lug 21A, with a fixed type of detent engagement, in the piston element 13. In fact, any attempts to operate the pressure setting ring nut 14 provided for setting the calibrating pressure of the calibrating assembly 10 would cause the cover 21, generally made of a synthetic material, to be broken.

Prior cartridge-cartridge holder safety assemblies are moreover provided with rather complex mutual coupling means, which have not been herein shown for simplicity, whereas the coupling means according to the invention will be disclosed hereinafter.

As shown in the preamble of the disclosure, in prior cartridge valves, the bottom of the sealing cup gaskets forms the bottom itself of the cartridge body 9, which is accordingly engaged against an annular seat formed in the cartridge holder and which, as above stated, could be abraded or scored.

For overcoming the above drawbacks, comes now the invention, which provides novel improvements of the cartridge valve, the cartridge holder thereof and coupling means for coupling these two components, while providing the possibility of assembling, at will, the cartridge valve in a lot of different cartridge holders. More specifically, the cartridge body 9 is herein made, according to the invention, as a cup having an independent bottom 23 with a window pattern 24. In the shown exemplary embodiment, the bottom 23 is provided, in the inside thereof, with the seat 26 for bearing thereagainst the bottom 19 of the sealing cup gasket 18 and, on the outside thereof, being provided with a tightly coupling lug 27 for providing a tight coupling with a corresponding housing seat 28 formed in the cartridge holder 3, corresponding to that which, in prior T-shape cartridge holders, was provided for receiving the cartridge valve cup gasket bottom.

To provide a perfect sealing between said bottom or coupling lug 27 of the cartridge valve 2 and said seat 28 provided in said cartridge holder 3, at least a sealing gasket is herein provided, for example in the form of an O-ring 29, which can be indifferently housed in the coupling lug 27 or in said seat 28 of the cartridge holder.

Moreover, according to the invention, the removable coupling means for removably coupling the cartridge body 9 and cartridge holder 3 are of a quick coupling type and being generally indicated by the reference number 31, and they will be disclosed in a more detailed manner hereinafter.

According to the invention, a prior cartridge holder, of a substantially T-shape, comprises now a housing chamber 6 for housing the cartridge valve 2, on the bottom of which chamber 6 is provided said seat 28 for tightly housing therein the bottom 23, 27 of the cartridge 2. For the remaining part, the cartridge holder 3 body or fitting comprises a known coupling fitting 7 for providing a connection to a component, not shown, of the considered liquid or gaseous fluid system, as well as an outlet fitting 8 for releasing the fluid as the valve 2 calibrating pressure is exceeded.

According to the invention, in an alternative embodiment thereof (figure 8), the cartridge holder 3A comprises any desired components of the considered liquid or gaseous fluid system, for example the pump supporting or holding body in the case of a heating system or a hot water producing system. The pump holder, or cartridge holder, 3A, could accordingly also support possible mechanical or electric components. In each case, following a water inlet fitting, schematically shown by the axis 32 thereof, the pump holder 3A comprises said housing seat 28 for housing said bottom 23, 27 of the cartridge 2. The reference number 8A shows the outlet fitting. The pump and related mechanical and electric fixtures supported on said cartridge holder 30 have been omitted for simplicity, since they do not come within the scope of the present invention.

Moreover, according to the invention, said removable quick coupling means 31 comprises a removable locking element 33, for example a U-shape bracket made, for example, of a metal wire, as well as two diametrically opposite housing seats 34 for housing the wing portions 33A of the bracket 33, each said wing or leg being formed by a half-seat 34A provided on the body 9 of the cartridge 2 and a half-seat 34B provided on the cartridge holder 3; 3A in a mutual opposite relationship. The reference number 37 shows a sealing element, for example an O-ring, engaged in a corresponding annular slot 38 of the cartridge body 9.

According to the invention, the two half-seats 34A of the cartridge 2 body 9 are formed by an annular slot 39, whereas the two half-seats 34B on the cartridge holder 3, 3A are formed by an annular slot length 41 formed in two diametrically opposite lugs 42 of the cartridge holder 3, 3A.

In order to automatically provide the necessary unique continuity locating of the outlet path between the cartridge 2 and cartridge holder 3, 3A, locating lugs 43 are provided on the cartridge 2, said locating lugs cooperating with the coupling lugs 42 of the cartridge holder 3, 3A. Thus, it would be possible to obtain in a very easy manner, and practically in a "blind" manner, the unique related position as desired in assembling the cartridge 2 and cartridge holder 3, 3A.

To that end, according to the invention, said locating lugs 43 are formed by annular flange sectors, outward projecting, and the circumferential extension whereof substantially corresponds to the circumferential spacing of the mutually facing front sides 44 of the two coupling lugs 42 on the cartridge holder 3, 3A.

The assembling/disassembling and operation of the cartridge-cartridge holder inviolable safety valve assembly 1 according to the invention are as follows:

### Assembling:

The cartridge valve 2 can be freely engaged in the housing chamber 6 therefor in the cartridge holder fitting 3, without engaging in the seat 28 of the cartridge holder the bottom 19 of the cup gasket 18, as it occurs in prior valves, but, on the contrary, by engaging therein the coupling lug 27 of the cartridge bottom 23. This coupling can be performed as, by turning the cartridge 2 about its longitudinal axis, the gaps between the locating lugs 43 are brought above the lugs 42 of the body of the cartridge holder 3. As shown in the drawings, which illustrate only this condition, the cartridge body 9 can be fully introduced into the chamber 6, and, in this position, at least one of the windows of the cartridge body 9 will be arranged in front of the outlet window 46 of the cartridge holder 3, 3a.

### Locking of the cartridge valve in the cartridge holder:

As the cartridge 2 has been introduced into the cartridge holder 3 or 3A, the wing or leg portions 33A of the wire bracket 33 can be engaged in the straight throughgoing paths formed between the opposite half-seats 34A and 34B, thereby the insertion of the bracket 33 into the cartridge holder will provide a finn mutual locking of the cartridge holder 3; 3A and cartridge valve 2. By providing a cartridge holder 3, the valve assembly 1, or 2-3, will be then ready to be fixed in the known pump holder body, not shown, of a heating system, a hot water producing system, or the like.

### Disassembling:

A removal of the cartridge valve 2 assembled in the cartridge holder 3; 3A would simply require a removal of the locking bracket 33 which can be simply carried out by disengaging the wing portions 33A of the bracket 33 from the related removable quick coupling means 31.

After having cleaned or replaced the cartridge valve 2, the assembling of the cleaned cartridge valve, or the replacement of a new valve (optionally, if necessary, with a different calibration set value) may be performed as hereinabove disclosed.

### Operation:

As far as the pressure of the fluid in the circuit holding the valve assembly 1; 1A therein is held under the pressure preset in the valve 2, the bottom 19 of the cup gasket 18 will be held in abutment on the inner seat 20 of the bottom 23 of the cartridge 9, as urged by the spring 12. As the valve 2 calibrating pressure is exceeded, the fluid will cause the bottom 19 of the gasket 18 to be raised from the seat 20, against the calibrating spring 12 force, and will be outward discharged through the fitting 8, whereas the calibrating spring 12 will interrupt the discharging of the fluid as the pressure of the latter in the system will be recovered to a value less than the calibrating pressure value. In the flow period of the fluid, such as water, possible small debris or solid panides could abrade or score the seat 20 or could be held locked between said seat 20 and the bottom of the gasket 19. Thus, in a case of a sealing failure, it would be necessary to remove the cartridge valve 2 to clean the seat 20, which could be performed without modifying the calibrating of the valve, by simply holding the bottom 19 of the gasket 18 raised against the urging of the spring 12.

From the above disclosure it should be apparent that the valve assembly 1 of the embodiment shown in figures 1-7 can be directly applied to a conventional pump holder and that the same inviolable safety cartridge valve 2 according to the invention can be likewise applied, at will, directly on a pump holder 3A according to the invention, operating by itself as a cartridge holder 3A. In this case, in the pump holder 3A a housing chamber 6A would be of course provided, for housing therein the cartridge valve 2 and with a related housing seat 28 for housing the bottom 23 of the cartridge 9, as well as the removable quick coupling means 31, or 34A, 42 as above disclosed with reference to the embodiment shown in figures 1 to 7.

It should be clearly apparent that this second embodiment would allow to fully omit the conventional cartridge holder having a T-shape 3.

From the above constructional and operational description, it should be easily apparent that the cartridge valve-cartridge holder inviolable safety valve assembly 1, 1A fully achieves the above mentioned technical aim while allowing to also achieve the mentioned advantages.

## Claims

1. A cartridge valve (2) and cartridge holder (3) inviolable safety valve assembly (1) for liquid or gaseous fluid systems, comprising:
a) a substantially tubular cartridge body (9), provided with perimetrical windows (11),
b) an adjustable spring assembly (10), housed in the body (9) of the cartridge and comprising a substantially cup-like gasket (18), the bottom (19) of which is affected by the fluid the maximum pressure whereof must be controlled,
c) a cover (21) removably coupled to said cartridge body (9) and which can be separated only by breaking said cover (21),
d) a cartridge holder (3) removably tightly housing a cartridge valve (2),
e) wherein said cartridge valve (2) and said cartridge holder (3) are provided with removable coupling means (31),
**characterized in that:**
f) the body (9) of the cartridge valve (2) is provided with an individual bottom (23) provided with windows (24) said body being provided, in the inside thereof, with a seat (20) for bearing thereagainst the bottom (19) of the cup gasket (18) and, on the outside thereof, with a tightly coupling lug (27) for providing a tight coupling with a corresponding housing seat (28) provided in the cartridge holder (3),
g) there is provided at least a sealing gasket (29) between said bottom or coupling lug (27) of the cartridge valve (2) and said housing seat (28) provided on the body of said cartridge holder (3), and
h) the removable coupling means (31) of the body (9) of the cartridge valve (2) and cartridge holder (3; 3A) are of a quick coupling type and comprise
- a removable locking element (33), for example in the form of a substantially U-shape bracket, for example made of a metal wire, and
- two diametrically opposite seats (34) each formed by a half seat (34A) formed on the cartridge body (9) and a half-scat (34B) formed on the cartridge holder (3; 3A), said half-seats (34A, 34B) being arranged in a mutual opposite relationship.

2. A cartridge valve and cartridge holder inviolable safety valve assembly according to Claim 1, **characterized in that** the cartridge holder (3), is formed by a fitting of substantially T-shape (3) comprising a housing chamber (6) for housing the cartridge valve (2), on the bottom of said chamber (6) being provided said tightly housing seat (28) for tightly housing the bottom (23, 27) of the cartridge (2).

3. A cartridge valve and cartridge holder inviolable safety valve assembly according to Claim 1, **characterized in that** the cartridge holder is formed by any components (3A) of the liquid or gaseous fluid system, for example by the pump holder body (3A) of a heating system or a hot water producing system, wherein in said pump holder body (3A), or the like, following a water inlet filling (32), is provided said tightly housing seat (28) for tightly housing said bottom (23, 27) of the cartridge (2).

4. A cartridge valve and cartridge holder inviolable safety valve assembly according to Claims 2 and 3, **characterized in that** said sealing gasket, for example an O-ring (29) is provided in the bottom (23, 27) of the cartridge valve (2) or in said housing seat (28) of said cartridge holder (3).

5. A cartridge valve and cartridge holder inviolable safety valve assembly according to Claim 1 to 4, **characterized in that** the two half-seats (34A) on the body (9) of the cartridge valve (2) comprise an annular slot (39) and the two half-seats (34B) on the cartridge holder (3; 3A) comprise an annular slot portion (41) formed in said diametrically opposite lugs (42) of the cartridge holder (3; 3A).

6. A cartridge valve and cartridge holder inviolable safety valve assembly according to Claims 1 and 5, **characterized in that** on said cartridge valve (2) are provided coupling locating lugs (43) cooperating with said lugs (42) of said cartridge holder (3; 3A) for providing an unique assembling position of said cartridge valve (2) and cartridge holder (3; 3A).

7. A cartridge valve and cartridge holder inviolable safety valve assembly according to Claim 6, **characterized in that** said locating lugs (43) comprise outward projecting annular flange sectors, the extension of which substantially corresponds to the spacing of the mutually facing front sides (44) of the two coupling lugs of the cartridge holder (3; 3A).

## Patentansprüche

1. Unverletzliche Sicherheitsventileinheit (1) bestehend aus einem Patronenventil (2) und einem Patronenhalter (3) für Anlagen für flüssige oder gasförmige Mittel enthaltend:
a) einen im wesentlichen röhrenförmigen Patronenkörper (9), der mit umfänglichen Fenstern (11) versehen ist,
b) eine einstellbare Federgruppe, die im Patronenboden (9) enthalten ist und eine im wesentlichen tassenförmige Dichtung (18) enthält, deren Boden (19) dem flüssigen Mittel ausgesetzt ist, dessen maximaler Druck zu prüfen ist,
c) einen Deckel (21), der mit dem genannten Patronenkörper (9) unlösbar kuppelbar und nur unter Brechung des genannten Deckels (21) trennbar ist,
d) einen Patronenhalter (3), der lösbar ein Patronenventil (2) dichtend aufnimmt,
e) wobei das genannte Patronenventil (2) und der genannte Patronenhalter (3) mit lösbaren Kupplungsmitteln (31) versehen sind,
**dadurch gekennzeichnet, dass**
f) der Boden (9) des Patronenventils (2) mit einem eigene Fenster (24) aufweisenden Boden (23) versehen ist, der innen mit einem Sitz (20) zum Abstützen des Bodens (19) der tassenförmigen Dichtung (18) und außen mit einem Kupplungsvorsprung (27) zum Erhalten einer dichtenden Kupplung mit einem entsprechenden Aufnahmesitz (28) versehen ist, der im Patronenhalter (3) vorgesehen ist,
g) wenigstens eine abdichtende Dichtung (29) zwischen dem genannten Boden- oder Kupplungsvorsprung (27) des Patronenventils (2) und dem genannten Aufnahmesitz (28) vorgesehen ist, welch letzterer im Körper des genannten Patronenhalters (3) vorgesehen ist, und
h) die lösbaren Kupplungsmitteln (31) des Körpers (9) des Patronenventils (2) und des Patronenhalters (3; 3A) vom Schnellkupplungstyp sind und enthalten
- ein zum Beispiel als im wesentlichen U-förmiger zum Beispiel aus Draht bestehendem Bügel ausgeführtes lösbares Spannelement (33), und
- zwei diametral gegenüberliegende Sitze (34), die jeweils durch einen Halbsitz (34A) im Patronenkörper (9) und einen Halbsitz (34B) im Patronenhalter (3; 3A) gebildet sind, wobei die genannten Halbsitze (34A, 34B) einander gegenüberliegend angeordnet sind.

2. Unverletzliche Sicherheitsventileinheit bestehend aus einem Patronenventil und einem Patronenhalter nach Anspruch 1, **dadurch gekennzeichnet, dass** der Patronenhalter (3) durch ein im wesentlichen T-förmiges (3) Verbindungsstück gebildet ist, das eine Aufnahmekammer (6) zur Aufnahme des Patronenventils (2) enthält, wobei auf dem Boden der genannten Kammer (6) der genannte abdichtende Aufnahmesitz (28) zur abdichtenden Aufnahme des Bodens (23, 27) der Patrone (2) vorgesehen ist.

3. Unverletzliche Sicherheitsventileinheit bestehend aus einem Patronenventil und einem Patronenhalter nach Anspruch 1, **dadurch gekennzeichnet, dass** der Patronenhalter (3) durch jeden beliebigen Bestandteil (3) der Anlage für flüssige bzw. gasförmige Mittel, zum Beispiel durch den Pumpenhalterkörper (3A) einer Heizanlage oder einer Warmwasserproduktionsanlage gebildet ist, wobei im genannten Pumpenhalterkörper (3A) oder desgleichen stromab einem Wassereingangverbindungsstück (32) der genannte abdichtende Aufnahmesitz (28) zur abdichtenden Aufnahme des genannten Bodens (23, 27) der Patrone (2) vorgesehen ist.

4. Unverletzliche Sicherheitsventileinheit bestehend aus einem Patronenventil und einem Patronenhalter nach Anspruch 2 und 3, **dadurch gekennzeichnet, dass** die genannte abdichtende Dichtung, zum Beispiel ein O-Ring (29), im Boden (23, 27) des Patronenventils (2) oder im genannten Aufnahmesitz (28) des genannten Patronenventilhalters (3) vorgesehen ist.

5. Unverletzliche Sicherheitsventileinheit bestehend aus einem Patronenventil und einem Patronenhalter nach Anspruch 1 bis 4, **dadurch gekennzeichnet, dass** die beiden auf dem Körper (9) des Patronenventils (2) vorgesehenen Halbsitze (34A) einen ringförmigen Schlitz (39) umfassen und die beiden auf dem Patronenhalter (3; 3A) vorgesehenen Halbschlitze (34B) einen ringförmigen Schlitzenteil (41) umfassen, der in den genannten diametral entgegengesetzten Vorsprüngen (42) des Patronenhalters (3; 3A) ausgearbeitet ist.

6. Unverletzliche Sicherheitsventileinheit bestehend aus einem Patronenventil und einem Patronenhalter nach Anspruch 1 und 5, **dadurch gekennzeichnet, dass** auf dem genannten Patronenventil (2) Positionierungs- und Kupplungsvorsprünge (43) vorgesehen sind, die mit den genannten Vorsprüngen (42) des genannten Patronenhalters (3; 3A) zusammenarbeiten, um eine eindeutige Montagelage des genannten Patronenventils (2) und Patronenhalters (3, 3A) zu bestimmen.

7. Unverletzliche Sicherheitsventileinheit bestehend aus einem Patronenventil und einem Patronenhalter nach Anspruch 6, **dadurch gekennzeichnet, dass** die genannten Positionierungsvorsprünge (43) nach außen abstehende ringförmige flanschartige Sektore umfassen, deren Erstreckung im wesentlichen dem Abstand zwischen den gegenseitig zugewandten Stirnseiten (44) der beiden Kupplungsvorsprünge des Patronenhalters (3; 3A) entspricht.

## Revendications

1. Ensemble (1) de soupape de sécurité inviolable comportant une soupape à cartouche (2) et un porte-cartouche (3) pour des installations pour fluides liquides et gazeux comprenant:
a) un corps (9) de la cartouche substantiellement tubulaire, avec des ouvertures (11) périmétraux,
b) un ensemble (10) à ressort réglable logé dans le corps (9) de la cartouche et comprenant un joint d'étanchéité (18) substantiellement en forme de tasse dont le fond (19) est exposé au fluide à contrôler en sa pression maximal,
c) un couvercle (21) qui est couplé d'une manière inamovible audit corps (9) de la cartouche et peut être séparé seulement par rupture dudit couvercle (21),
d) un porte-cartouche (3) qui loge amoviblement à étanchéité une soupape à cartouche (2),
e) où ladite soupape à cartouche (2) et ledit porte-cartouche (3) sont muni des moyens d'accouplement (31) amovible,
**caractérisé en ce que**
f) le corps (9) de la soupape à cartouche (2) comporte un propre fond (23) comportant des ouvertures (24), ledit corps comportant intérieurement une siége (20) pour soutenir contre la même le fond (19) du joint d'étanchéité (18) en forme de tasse et extérieurement une saillie d'accouplement à étanchéité pour assurer un couplage à étanchéité avec une siége (28) correspondante prévue dans le porte-cartouche,
g) au moins un joint d'étanchéité (29) est prévu entre ledit fond ou saille d'accouplement (27) de la soupape à cartouche (2) et ladite siége d'accouplement (28) prévue sur le corps dudit porte-cartouche (3), et
h) les moyen d'accouplement amovible (31) du corps (9) de la soupape à cartouche (2) et le porte-cartouche (3 ; 3A) sont du type d'accouplement rapide et comportent
- un élément de blocage amovible (33) pour exemple en forme d'un étrier substantiellement en U, qui consiste pour exemple en un fil métallique, et
- deux siéges (34) diamétralement opposées, chaque siége est formée par une demi-siége (34A) formée sur le corps (9) de la cartouche et par une demi-siége (34B) formée sur le porte-cartouche (3 ; 3A), lesdites demi-siéges (34A, 34B) étant agencées réciproquement opposées.

2. Ensemble de soupape de sécurité inviolable comportant une soupape à cartouche et un porte-cartouche selon la revendication 1,
**caractérisé en ce que**
le porte-cartouche (3) est formé par un raccord substantiellement en T (3) qui comporte une chambre (6) de logement de la soupape à cartouche (2), sur le fond de ladite chambre (6) étant prévue ladite siége de logement (6) à étanchéité pour loger à étanchéité le fond (23, 27) de la cartouche (2).

3. Ensemble de soupape de sécurité inviolable comportant une soupape à cartouche et un porte-cartouche selon la revendication 1,
**caractérisé en ce que**
le porte-cartouche (3) est formé par un constituant (3A) quelconque de l'installation pour fluides liquides et gazeux par exemple par le corps porte-pompe (3A) d'une installation de chauffage ou de production d'eau chaud, où dans ledit corps du porte-pompe (3A), or similaire, aval d'un raccord d'entrée de l'eau (32) est prévue ladite siége (28) pour le logement à étanchéité dudit fond (23, 27) de la cartouche.

4. Ensemble de soupape de sécurité inviolable comportant une soupape à cartouche et un porte-cartouche selon les revendications 2 et 3,
**caractérisé en ce que**
ledit joint d'étanchéité (18) pour exemple un O-ring (29) est prévu dans le fond (23, 27) de la soupape à cartouche (2) ou dans ladite siége de logement (28) dudit porte-cartouche (3).

5. Ensemble de soupape de sécurité inviolable comportant une soupape à cartouche et un porte-cartouche selon les revendications 1 à 4,
**caractérisé en ce que**
les deux demi-siéges (34A) sur le corps (9) de la soupape à cartouche (2) comportent une fente annulaire (39) et les deux demi-siéges (34B) sur le porte-cartouche (3 ; 3A) comportent une partie (41) de fente annulaire qui est façonnée dans lesdites saillies (42) diamétralement opposées du porte-cartouche (3 ; 3A).

6. Ensemble de soupape de sécurité inviolable comportant une soupape à cartouche et un porte-cartouche selon les revendications 1 et 5,
**caractérisé en ce que**
sur ladite soupape à cartouche (2) sont prévues des saillies (43) de position et de couplage coopérant avec lesdites saillies (42) dudit porte-cartouche (3 ; 3A) pour assurer une position de montage univoque de ladite soupape à cartouche (2) et ledit porte-soupape (3 ; 3A).

7. Ensemble de soupape de sécurité inviolable comportant une soupape à cartouche et un porte-cartouche selon la revendication 6,
**caractérisé en ce que**
lesdites saillies (43) de position comportent des secteurs annulaires en forme d'une bride saillante vers l'externe dont l'extension corresponde substantiellement à la distance entre les côtés (44) réciproquement frontales des deux saillies de couplage du porte-cartouche (3 ; 3A).
